# EUROPÄISCHE PATENTSCHRIFT

(11) **EP 0 960 666 B1**
(45) Veröffentlichungstag und Bekanntmachung des Hinweises auf die Patenterteilung: **25.06.2003**
(21) Anmeldenummer: 98810496.4
(22) Anmeldetag: 28.05.1998
(51) Int. Cl.: B21D 51/22, B23P 9/02

(54) **Kochgefäss und Verfahren zur Herstellung eines Kochgefässes**
Cooking pot and method of making a cooking pot
Casserole et procédé de fabrication d'une casserole

(43) Veröffentlichungstag der Anmeldung: 01.12.1999
(73) Patentinhaber: AMC International Alfa Metalcraft Corporation AG, 6343 Rotkreuz (CH)
(72) Erfinder: von der Becke, Reinhard, 8126 Zumikon (CH); Jaschke, Dietrich, 8640 Rapperswil (CH); Richter, Utz, 6330 Cham (CH); Günther, Ulrich, 01665 Meissen (DE); Virkus, Uwe, 01689 Weinböhla (DE)
(74) Vertreter: Liebetanz, Michael, Dipl.-Phys.

(56) Entgegenhaltungen:
- WO-A-96/33030
- US-A- 4 320 644
- US-A- 4 726 852
- US-A- 4 903 515

## Beschreibung

Die Erfindung betrifft ein Kochgefäss aus Edelstahl mit einem Boden, mit Aussenseitenflächen, mit einer Bodeninnenfläche, mit Bodenrundungsflächen und Innenseitenflächen, wobei die Bodeninnenfläche, die Bodenrundungsflächen und die Innenseitenflächen die einem Kochgut zugewandten Oberflächen bilden und wobei mindestens ein Teil der einem Kochgut zugewandten Oberflächen eine gewalzte Oberfläche aufweist. Weiterhin betrifft die Erfindung ein Verfahren zur Herstellung eines Kochgefässes und eine Vorrichtung zur Durchführung des Verfahrens.

Ein Kochgefäss mit den oben genanntnen Merkmalen ist aus der WO-A-96 33 030 bekannt. Aus dem Stand der Technik sind ferner verschiedenste Kochgefässe und Verfahren zu deren Herstellung bekannt. Insbesondere ist es bekannt, nach der Formgebung des Gefässes dessen dem Kochgut zugewandte Oberfläche zu behandeln. Hierfür kommen für Edelstähle bekannte Verfahren wie Schleifen, Polieren oder Beizen zum Einsatz.

Die sicher bekannteste Beschichtung nach dem Stand der Technik, die für Kochgefässe aus Aluminium eingesetzt wird, ist die Beschichtung mit Anti-Haft-Materialien wie mit dem unter der Marke Teflon bekannten Material. Solche Beschichtungen weisen den Nachteil auf, dass sie sehr empfindlich hinsichtlich einer Beschädigung der Beschichtung sind und eine besonders vorsichtige Behandlung des Kochgefässes während des Kochvorganges und auch während der Reinigung erfordern.

In dem Zusammenhang dieser Schrift wird unter Kochgefäss jeder in einer Küche einsetzbare Behälter verstanden, der zur Zubereitung von Speisen Verwendung findet, unabhängig von der geometrischen Grundform, die insbesondere rund, oval, elliptisch, viereckig oder vieleckig sein kann. Hierzu gehören neben Kochtöpfen auch Bratpfannen, Bräter, Sauteusen, Dampfgarsysteme, Dampfdruckkochtöpfe etc. Mit dem Begriff Kochen ist nicht nur das physikalische Kochen einer Flüssigkeit zu verstehen, sondern auch sonstige Vorgehensweisen wie Braten, Dünsten, Schmoren, Fritieren etc. . Als Innenfläche eines Kochgefässes wird die gesamte Funktionsfläche einer Gareinheit bezeichnet, die mit dem Kochgut beim normalen Garvorgang in Berührung kommt.

Es ist bekannt, dass die Struktur der dem Kochgut zugewandten Oberfläche des Kochgefässes, also insbesondere dessen Bodeninnenfläche, entscheidenden Einfluss auf das Gebrauchsverhalten und hier insbesondere beim Anbraten und Reinigen aufweist. Neben der oben genannten Beschichtung werden diese Oberflächen im Stand der Technik nach der Ausformung auch gebeizt, geschliffen und/oder poliert.

Ausgehend von diesem Stand der Technik liegt der Erfindung die Aufgabe zugrunde, ein Kochgefäss der eingangs genannten Art zu schaffen, welches gewisse Anti-Haft-Eigenschaften wie beispielsweise einer bei Aluminiumkochgefässen bekannten Teflon-Oberfläche mit der Robustheit eines hochwertigen Edelstahlkochgefässes verbindet.

Weiterhin ist es Aufgabe der vorliegenden Erfindung, ein Verfahren zur Herstellung eines solchen Kochgefässes und eine entsprechende Vorrichtung anzugeben.

Diese Aufgabe wird für ein Kochgefäss der eingangs genannten Art erfindungsgemäss dadurch gelöst, dass mindestens ein Teil der einem Kochgut zugewandten Oberflächen des tiefgezogenen Kochgefässes nach dem Tiefziehen glatt- und/oder festgewalzt wurde.

Dadurch, dass die Oberfläche nach dem Tiefziehen glatt- und/oder festgewalzt wird, wird gleichzeitig eine Härteerhöhung und eine grössere Korrosionsbeständigkeit erhalten. Die stark verminderte Rauhigkeit ergibt hervorragende Ablöseeigenschaften insbesondere für ohne Fett angebratenes Bratgut und ermöglicht eine einfache Reinigung.

Glatt- und/oder Festwalzen ist ein Verfahren zur lokal begrenzten Druckbeaufschlagung zur Verfestigung der Oberfläche von insbesondere schwingungsbeanspruchten Bauteilen wie Wellen und Kugellagerringen. Dabei handelt es sich jeweils um rotationssymmetrische Volumenkörper und das Verfahren wird vom Fachmann in der Maschinenindustrie und insbesondere in der Automobilbranche zum Zwecke der Vermeidung von Rissausbildung bei Wechsellasten eingesetzt.

Ein vorteilhaftes Verfahren zur Herstellung eines Kochgefässes gemäss der Erfindung ist in Anspruch 3 gekennzeichnet. Eine Vorrichtung zur Durchführung des Verfahrens ist in Anspruch 7 niedergelegt.

Weitere vorteilhafte Ausführungsformen sind jeweils in den zugeordneten Unteransprüchen gekennzeichnet.

Nachstehend werden Ausführungsbeispiele der Erfindung in den Zeichnungen beispielhaft erläutert. Es zeigen:
- Fig. 1: einen Ablaufplan der Fertigung eines Kochgefässes nach einem Ausführungsbeispiel der Erfindung,
- Fig. 2: eine schematisierte Querschnittsansicht eines Kochgefässes nach einem Ausführungsbeispiel der Erfindung, und
- Fig. 3: ein Diagramm des Härte-Tiefe-Verlaufs bei einem erfindungsgemässen Kochgefäss für den gewalzten Bereich, und,
- Fig. 4: eine schematisierte Ansicht eines Kochgefässes nach einem weiteren Ausführungsbeispiel der Erfindung zusammen mit einer schematisierten Ansicht eines Bearbeitungswerkzeuges.

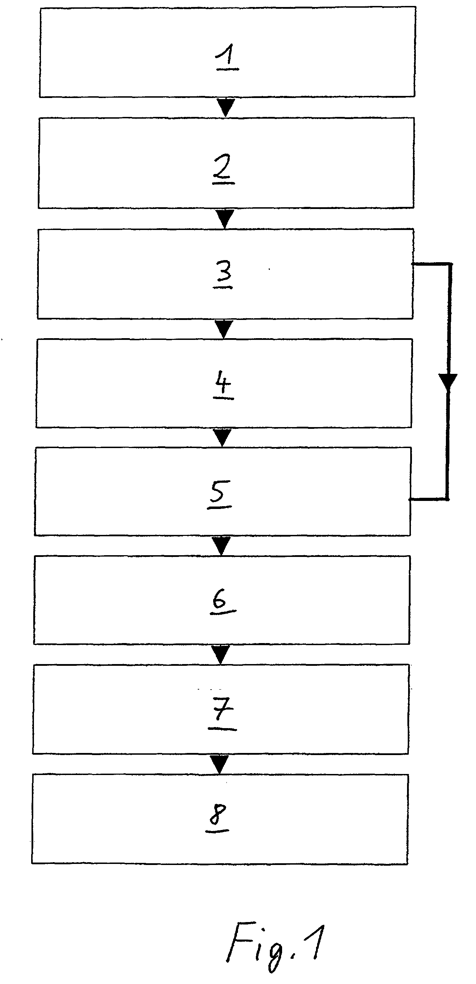

Die Fig. 1 stellt in schematisierter Weise einen Ablaufplan der Fertigung eines Kochgefässes nach einem Ausführungsbeispiel der Erfindung dar. Ausgangspunkt des Verfahrens ist ein Stück rostund säurebeständiger Stahl 1. Dieser wird dem Rondenschneiden 2 zugeführt, wonach der Topfkörper im Schritt 3 durch Tiefziehen, Beschneiden und Randprägen entsteht. Hierbei sind ebenfalls Herstellungsvarianten einbegriffen, welche den Topfkörper aus zwei oder mehr einzelnen Teilen durch z.B. zusätzliches Verschweissen, insbesondere Laserschweissen, erzeugen.

Anschliessend kommt ein optionaler Schritt 4 der Einfügung einer Bodenkapsel bzw. der Applikation eines Topfbodens. Dies kann insbesondere durch Press-Schweissen, Löten oder ähnliche Verfahren des Standes der Technik durchgeführt werden.

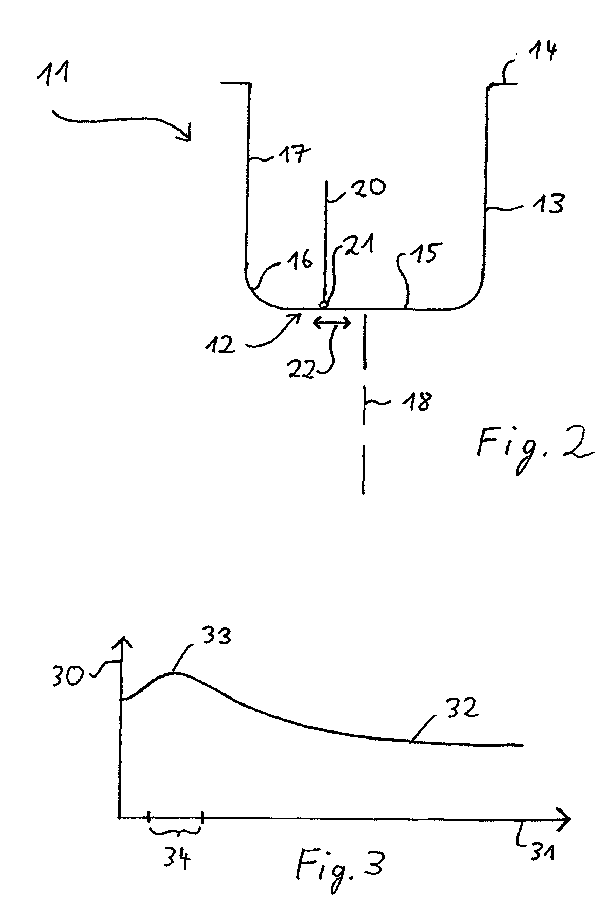

Dem Schritt 4 bzw. 3 folgt ein erster Schritt der Oberflächenbearbeitung 5. Dieser besteht zum einen aus der Vor- und Fertigbearbeitung der Aussenflächen bzw. der nicht von dem erfindungsgemässen Verfahren zu behandelnde Innenflächen, wie dies aus der Beschreibung zur Fig. 2 hervorgeht. Zum anderen besteht dieser Schritt aus der Vorbearbeitung der Innenflächen. Diese Bearbeitung kann insbesondere durch Beizen, Schleifen und Polieren durchgeführt werden.

Der zweite Schritt der Oberflächenbearbeitung 6 betrifft das erfindungsgemässe Walzen, welches noch genauer in der nachfolgenden Beschreibung niedergelegt ist. Der Schritt 7 betrifft die Montage und Qualitätskontrolle, der ein Waschschritt vorausgeht. Mit dem Kasten 8 ist die Verpackung und die Vorbereitung zur Auslieferung des derart erzeugten Kochgefässes bezeichnet.

Ein erfindungsgemässes Kochgefäss 11, wie es schematisch in der Fig. 2 dargestellt ist, besteht aus Edelstahl. Im Folgenden wird dabei die Herstellung eines Kochgefässes in nicht limitierender Weise anhand einer rotationssymmetrischen Einheit beschrieben. Es verfügt über einen Boden 12, Aussenseitenflächen 13, einen optionalen Schüttrand 14, eine Bodeninnenfläche 15, Bodenrundungsflächen 16 und Innenseitenflächen 17. Anstelle des Topfes 11 kann natürlich auch jedes andere Kochgefäss entsprechend der Erfindung ausgestaltet sein.

Mit dem Bezugszeichen 18 ist die Symmetrieachse des Kochgefässes 11 bezeichnet, d.h. die Achse, um die das Kochgefäss 11 bei der Bearbeitung nach Schritt 6 rotiert. Dabei wird ein Bearbeitungswerkzeug 20 mit einem Bearbeitungskopf 21 auf die Bodeninnenfläche 15 abgelassen und unter hohem Druck aufgedrückt. Damit wird ein Kreisring mit dem Radius des Abstandes Symmetrieachse 18 - Bearbeitungskopf 21 erfindungsgemäss bearbeitet. Durch eine Verschiebung des Bearbeitungswerkzeuges 20 entlang des Doppelpfeiles 22 wird der bearbeitete Kreisring verändert und so durch Auswahl geeigneter Vorschübe nach und nach die gesamte Bodeninnenfläche 15 bearbeitet. Bei der Verwendung eines Bearbeitungswerkzeuges 20 mit einem Bearbeitungskopf 21, der sich bei einer Bewegung in jede Richtung 22 abrollt, kann eine Umformung ohne das Auftreten zusätzlicher Schubspannungen Umformung erreicht werden

Für die Bearbeitung der Innenseitenflächen 17 rotiert das Kochgefäss 11 ebenfalls um die Achse 18, wobei lediglich das Werkzeug 20 im wesentlichen rechtwinklig zu der in der Fig. dargestellten Lage ausgerichtet ist. Bei der Bearbeitung der Bodenrundungsflächen 16 wird ebenfalls ein weitgehend rechter Winkel zwischen Werkzeug und zu bearbeitender Fläche eingehalten, wobei das Werkzeug entsprechend zu führen ist. Neben der Stellung im rechten Winkel kann das Werkzeug auch eine Abweichung von einem rechten Winkel von beispielsweise plus/minus 15 Grad aufweisen.

Das Werkzeug 20 ist ein Werkzeug zum Glattwalzen bzw. Festwalzen. Dieses beim Stand der Technik für den Einsatz beispielsweise in der Automobilindustrie vorgesehene Werkzeug dient der Oberflächenverfestigung von Kugellagern und Wellen zur Erhöhung der Wechsellastbeständigkeit.

Eine Vollflächenbearbeitung zur Bearbeitung auch des Zentrumbereiches wurde im Ausführungsbeispiel durch exzentrische Rotation der Einheit erzeugt.

Besonders vorteilhaft ist ein Werkzeug 20, welches einen Kugelschreiberähnlichen Kopf (einen sogenannten Ballpoint) aufweist, bei dem es sich um ein hydrostatisches Glattwalzwerkzeug handelt, mit dem komplexe Konturen walzbar sind, da eine seitliche Verschiebung nicht zum Auftreten von zusätzlichen Schubspannungen in der Oberfläche führt.

Bei dem in diesem Ausführungsbeispiel beschriebenen Glattwalzen mit diesem Werkzeug ist der Kugeldurchmesser, die Walzgeschwindigkeit, der Walzvorschub und der Walzdruck ausschlaggebend, wobei das Ergebnis auch vom Vorbearbeitungszustand des Kochgefässes vor dem Glatt/Festwalzen abhängt. Entgegen dem bekannten Einsatz dieses Werkzeuges zur Erzeugung von wechsellastbeständigen Elementen ist bei Kochgefässen die Geometriestabilität und die Oberflächenstruktur nach der Bearbeitung entscheidend. Es ist eine Vollflächenbearbeitung einschliesslich des Zentrumsbereiches notwendig und die Möglichkeit der Bearbeitung nichtrotationssymmetrischer Kochgefässe ist erwünscht.

Die eingesetzte Walzgeschwindigkeit bei Testmustern lag bei einem Kugeldurchmesser von 6 Millimeter beispielsweise bei 150 Meter/Minute. Der Vorschub ist vorteilhafterweise auf 0,05 Millimeter eingestellt worden. Der Walzdruck wurde jeweils in 50 bar Schritten erhöht, wobei sich eine zufriedenstellende Oberfläche und damit verbundene Randaufhärtung ab ca. 100 bar ergab.

Der Härte-Tiefe-Verlauf ist schematisch in der Fig. 3 dargestellt. Mit dem Bezugszeichen 30 ist die Härte und mit dem Bezugszeichen 31 die Tiefe (Abstand von der Oberfläche) versehen worden. Die sich ergebende Kurve 32 ist typisch für Walzvorgänge und kann zur eindeutigen Identifizierung des Einsatzes des erfindungsgemässen Verfahren herangezogen werden. Strahlen, Schleifen oder Polieren weisen nicht das Maximum 33 der Härte in einem Abstand von ungefähr 0,05 bis 0,1 Millimeter von der Oberfläche des bearbeiteten Kochgefässes entsprechend dem Intervall 34 auf. Ausserdem ergibt sich eine Härtetiefe von vorzugsweise mindestens 0,3 Millimeter. Die Härtetiefe oder Gesamteindringtiefe der Aufhärtung ist der Bereich in der Tiefe des Materials, in welchem die Härte grösser als die Ausgangshärte vor dem Walzschritt gemäss dem Verfahren ist. Das Maximum 33 kann auch einen kleineren Abstandswert von beispielsweise 0,02 Millimeter von der Oberfläche des bearbeiteten Kochgefässes aufweisen.

Der α'-Martensit Anteil steigt mit steigendem Walzendruck an. Beträgt der bei einem Walzendruck von 100 bar noch ca. 1/3 Prozent, so übersteigt er in den Ausführungsbeispielen bei 150 bzw. 200 bar die 1 bzw. 2 Prozent.

Die Walzgeschwindigkeit führte bei Geschwindigkeiten zwischen 50 und 500 Meter/Minute zu keiner Veränderung der erzielten Rauhigkeit. Der Walzvorschub sollte zur Vermeidung von Walzspuren vorteilhafterweise möglichst klein gehalten werden. Zur Vermeidung von solchen Spuren sind Werte von kleiner 0,2 Millimeter notwendig, ein Wert von 0,05 Millimeter ist sehr vorteilhaft.

Der Walzdruck führte ab ca. 100 bar zu Rauhigkeiten unter 2 Mikrometer, wobei ab ungefähr 150 bar keine nennenswerte Verminderung der Rauhigkeit unter 1 Mikrometer mehr zu beobachten war.

Ein Test auf die Qualität des erzeugten Kochgefässes kann im Vergleichstest mit nicht entsprechend der Erfindung behandelten Kochgefässen nach aus dem Stand der Technik bekanntem Vorgehen (d.h. Schleifen oder Polieren der Innenoberflächen) insbesondere an drei Punkten beurteilt werden.
- Das Anbratverhalten. Anbraten führt beim Stand der Technik zu starken Anhaftungen des Bratgutes, welches beim Ablösen und Wenden zu Zerstörungen des Bratgutes führt.
- Reinigung bei eingebranntem Sud. Bei Anbraten einbrennender Sud ist bei Kochgefässen nach dem Stand der Technik nur mittels handelsüblichem Stahlreiniger und starker mechanischer Reinigung bei hohem Zeit- und Kraftaufwand zu entfernen. Die im Stahlreiniger enthaltenen Schleifkörner aktivieren die Oberfläche.
- Qualität der Reinigung, insbesondere bei maschineller Reinigung. Die Reinigung bekannter Kochgefässes erfolgt oftmals nicht rückstandsfrei, ist damit hygienisch unzureichend und auch der Ausgangspunkt von Schäden im Oberflächenbereich des Kochgefässes.

Mit der Erfindung ist ein Kochgefäss erstellbar, welches beim Anbraten ein verbessertes schnelles und zerstörungsfreies Ablösen des Bratgutes gewährleistet, welches ein deutlich verbessertes Reinigungsverhalten mit rückstandsfreien Funktionsflächen zeigt.

Mit dem erfindungsgemässen Verfahren wird eine Innenoberfläche eines Kochgefässes erzeugt, die ein metallisch blankes, leicht glänzendes bis glänzendes Aussehen aufweist, Antihafteigenschaften besitzt und erhöht korrosionsbeständig ist. Vergleichsversuche mit aus dem gleichen Rohmaterial hergestellten Kochgefässen, bei denen lediglich der Schritt 6 weggelassen worden ist, haben ergeben:
- eine Erhöhung der Korrosionsbeständigkeit um 30 Prozent (potentiodynamische Analyse-SPK)
- eine Erhöhung der Härte um 20 Prozent (HRV)
- eine Verminderung der Rauhigkeit auf unter 2 Mikrometer ausgehend von 5 Mikrometer bei dem unbehandelten Kochgefäss
- ein Erzeugen einer nicht-anhaftenden und für Wasser nichtbenetzenden Innenoberfläche des Kochgefässes.

Mit den beiden erstgenannten Punkten ergeben sich Verbesserungen der physikalischen Eigenschaften, die zu einer grösseren Toleranz gegenüber Benutzungsfehlern der Kochgefässe bei und durch den Kunden führen.

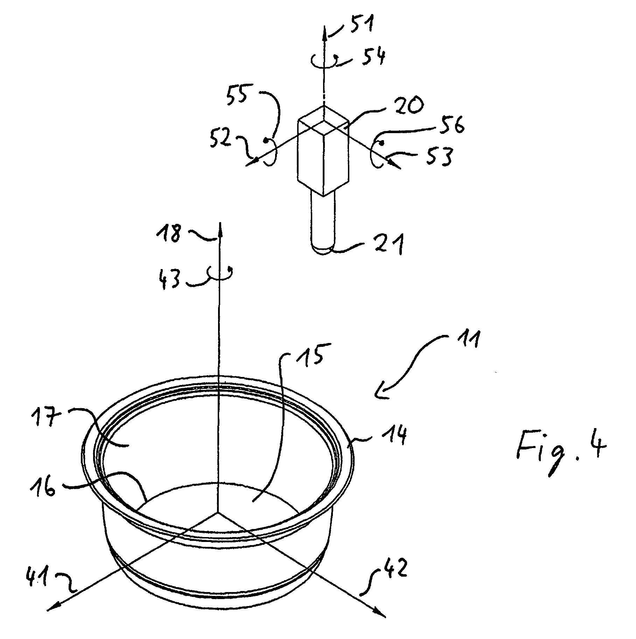

Die Fig. 4 zeigt eine schematisierte Ansicht eines Kochgefässes nach einem weiteren Ausführungsbeispiel der Erfindung zusammen mit einer schematisierten Ansicht eines Bearbeitungswerkzeuges. Gleiche Merkmale sind in allen Zeichnungen mit gleichen Bezugszeichen versehen.

Auch in der Fig. 4 ist ein um die Achse 18 rotationssymmetrisches Kochgefäss 11 dargestellt. Die Bodenfläche 15 kann aber auch beispielsweise oval oder im wesentlichen rechteckig sein oder jede andere vorbestimmte Form aufweisen.

Es ist lediglich ein Walzwerkzeug 20 mit einem Bearbeitungskopf 21 dargestellt. Es ist auch der Einsatz von Mehrelementwerkzeugen, Werkzeugen mit mehr als einem Walzelement möglich.

Die Erzeugung der Relativbewegung des Werkzeuges zum Werkstück (Bearbeitungsrichtung und Vorschubrichtung) kann durch die Wahl der für die jeweilige Geometrie des Kochgefässes günstige Anzahl und Art der beweglichen Achsen für das Werkstück 18, 41, 42 und 43 und für das Werkzeug 51, 52, 53, 54, 55 und 56 bewirkt werden. Damit ist eine Vollflächenbearbeitung beliebiger Gefässe möglich.

Neben der beschriebenen Einfügung des Glatt/Festwalzens bei der Herstellung des Kochgefässes kann dieser Schritt auch an beliebiger anderer Stelle vorgenommen werden. Damit können die oben beschriebenen Eigenschaften allerdings eventuell nur teilweise erhalten werden. Die besondere Feinstruktur der Oberfläche kann nur durch das Glatt/Festwalzen als Finish-Bearbeitung der Oberfläche erzeugt werden.

Es ist insbesondere auch möglich, bereits im Einsatz befindliche Kochgefässe, d.h. mit dem Stand der Technik oberflächenbearbeitete Kochgefässe, nachzubehandeln und somit die verbesserten Eigenschaften nachträglich zu erzeugen.

Durch die Wahl des Zeitpunktes der Durchführung des zusätzlichen Glatt/Festwalzens im Prozessverlauf können einige oder alle folgenden Eigenschaften der Oberfläche erzielt werden: Aufhärtung, erhöhte Korrosionsbeständigkeit, Musterung durch eine vorbestimmte Wahl der Walzbahnen, reduzierte Oberflächenspannung und Antihafteffekte. Durch Wahl der Bahnkurven, entlang denen jeweils lokal begrenzt ein Druck in Normalenrichtung auf die Oberfläche aufgebracht wird, und die Vorschubbewegung wird eine flächig gewalzte Oberfläche erzielt und es werden die genannten Oberflächeneigenschaften eingestellt.

## Patentansprüche

1. Kochgefäss aus Edelstahl mit einem Boden (12), mit Aussenseitenflächen (13), mit einer Bodeninnenfläche (15), mit Bodenrundungsflächen (16) und Innenseitenflächen (17), wobei die Bodeninnenfläche (15), die Bodenrundungsflächen (16) und die Innenseitenflächen (17) die einem Kochgut zugewandten Oberflächen bilden und wobei mindestens ein Teil der einem Kochgut zugewandten Oberflächen eine glatt/festgewalzte Oberfläche aufweist , **dadurch gekennzeichnet, dass** mindestens ein Teil der einem Kochgut zugewandten Oberflächen des tiefgezogenen Kochgefässes nach dem Tiefziehen glatt- und/oder festgewalzt wurde.

2. Kochgefäss nach Anspruch 1, **dadurch gekennzeichnet, dass** die gewalzte Oberfläche eine Rauhigkeit von kleiner 2 Mikrometer und der Härte-Tiefe-Verlauf ein Maximum von mindestens 1,2 mal die Ausgangshärte des Grundmaterials im Abstand von 0,05 bis 0,1 Millimeter von der gewalzten Oberfläche mit einer Gesamteindringtiefe der Aufhärtung von mindestens 0,3 Millimeter aufweist.

3. Verfahren zur Herstellung von Kochgefässen (11), mit den Verfahrensschritten
- des Rondenschneidens (2) aus einem Stück rost- und säurebeständigen Stahls (1),
- des Tiefziehens, Beschneidens und Randprägens (3) des Topfkörpers,
- einem ersten Schritt der Oberflächenbearbeitung (5), welcher eine Vor- und Fertigbearbeitung der Aussenflächen (12, 13) und der Innenflächen (16, 17) umfasst,
**dadurch gekennzeichnet, dass** das Verfahren nach dem Schritt des Tiefziehens des Topfkörpers einen zweiten Schritt der Oberflächenbearbeitung (6) umfasst, wobei auf mindestens einen Teil der Innenoberfläche (15) des Kochgefässes (11) lokal begrenzt ein Druck im wesentlichen in Normalenrichtung auf die Oberfläche durch Glatt- und/oder Festwalzen aufgebracht wird.

4. Verfahren nach Anspruch 3, **dadurch gekennzeichnet, dass** der erste Schritt der Oberflächenbearbeitung (5) nur eine Vorbearbeitung der von dem nachfolgend durchgeführten zweiten Schritt zu behandelnden Innenoberflächen (15) umfasst und/oder dass der erste Schritt der Oberflächenbearbeitung (5) Beizen, Schleifen und/oder Polieren umfasst.

5. Verfahren nach einem der Ansprüche 3 oder 4, **dadurch gekennzeichnet, dass** im zweiten Schritt (6) ein Bearbeitungswerkzeug (20) mit einem Bearbeitungskopf (21) unter Druck jeweils im wesentlichen in Normalenrichtung auf die zu bearbeitende Innenoberfläche (15) aufgesetzt wird und auf dieser durch eine Relativbewegung zwischen Kochgefäss und Werkzeug Walzbahnen erzeugt werden, mit denen teilweise oder vollständig flächenhaft bearbeitete Innenoberflächen (15) erzeugbar sind.

6. Verfahren nach einem der Ansprüche 3 oder 4, **dadurch gekennzeichnet, dass** im zweiten Schritt (6) das Kochgefäss (11) um seine Symmetrieachse (18) gedreht wird, dass ein Bearbeitungswerkzeug (20) mit einem Bearbeitungskopf (21) unter Druck jeweils im wesentlichen in Normalenrichtung auf die zu bearbeitende Innenoberfläche (15) aufgesetzt wird, so dass ein gewalzter Kreisring mit dem Radius des Abstandes Symmetrieachse (18) - Bearbeitungskopf (21) entsteht, und dass anschliessend das Bearbeitungswerkzeug (20) radial (22) verschoben wird, um nach und nach den vorbestimmten Anteil der Innenoberfläche (15) zu beaufschlagen.

7. Vorrichtung zur Durchführung des Verfahrens nach einem der Ansprüche 3 bis 6, **dadurch gekennzeichnet, dass** ein Halter für das Kochgefäss vorgesehen ist, mit dem dieses feststeht oder in einer oder mehreren Richtungen (18, 41, 42) parallel oder senkrecht zu seiner Symmetrieachse (18) bewegbar ist, dass ein Bearbeitungswerkzeug (20, 21) zum Glatt- und/oder Festwalzen von Volumenkörpern vorgesehen ist, mit dem ein Druck in Normalenrichtung auf die Innenoberfläche (15) des Kochgefässes (11) aufbringbar ist, und dass das Bearbeitungswerkzeug (20, 21) feststeht oder in einer oder mehreren Richtungen (51, 52, 53) über einen verschieblichen Halter bewegbar ist, so dass die Bearbeitungsspitze des Bearbeitungswerkzeuges (20, 21) relativ zum Kochgefäss (11) verfahrbar ist.

8. Vorrichtung nach Anspruch 7, **dadurch gekennzeichnet, dass** ein Halter für das Kochgefäss vorgesehen ist, mit dem dieses um seine Symmetrieachse (18) drehbar ist, dass ein Bearbeitungswerkzeug (20, 21) zum Glatt- und/oder Festwalzen von Volumenkörpern vorgesehen ist, mit dem ein Druck in Normalenrichtung auf die Innenoberfläche (15) des Kochgefässes (11) aufbringbar ist, und dass das Bearbeitungswerkzeug (20, 21) an einem verschieblichen Halter befestigt ist, mit welchem die Bearbeitungsspitze des Bearbeitungswerkzeuges (20, 21) radial (22) zur Symmetrieachse (18) des Kochgefässes (11) verfahrbar ist, wobei im Zentrumsbereich des Kochgefässes (11) eine exzentrische Rotation des Bearbeitungswerkzeuges (20, 21) durchführbar ist.

9. Vorrichtung nach Anspruch 7 oder 8, **dadurch gekennzeichnet, dass** das Bearbeitungswerkzeug (20) einen Bearbeitungskopf (21) aufweist, der bei einer Bewegung in jede Richtung (22) quer zur Walzrichtung abrollt, so dass eine Umformung ohne Auftreten zusätzlicher Schubspannungen erreicht werden kann.

## Claims

1. Cooking vessel of special steel with a bottom (12), with outer side surfaces (13), with an inner bottom surface (15), with rounded bottom surfaces (16) and with inner side surfaces (17), the inner bottom surface (15), the rounded bottom surfaces (16) and the inner side surfaces (17) forming the surfaces facing items to be cooked, wherein at least part of the surfaces facing items to be cooked has a burnished/hard-rolled surface, **characterised in that** at least part of the surfaces facing items to be cooked had been burnished and/or hard-rolled after deep drawing.

2. Cooking vessel according to claim 1, **characterised in that** the rolled surface has a roughness of less than 2 micrometer and the variation in hardness in relation to depth has a maximum of at least 1.2 times the initial hardness of the base material at a distance of 0.05 to 0.1 of a millimeter from the rolled surface, with a total depth of penetration of the hardening of at least 0.3 of a millimeter.

3. Method for producing cooking vessels (11), with the method steps of
- circling (2) from a piece of stainless, acid-resistant steel (1),
- deep drawing, trimming and edge stamping (3) of the body of the pot,
- a first step of surface working (5), which comprises preworking and finishing of the outer surfaces (12, 13) and the inner surfaces (16, 17),
**characterised in that** the method further comprises, after deep drawing of the body of the pot, a second step of surface working (6), in which a pressure is applied in a locally restricted area to the surface of at least part of the inner surface (15) of the cooking vessel (11), at a direction essentially normal to it, by burnishing and/or hard-rolling.

4. Method according to claim 3, **characterised in that** the first step of surface working (5) only comprises preworking of the inner surfaces (15) to be treated by the second step subsequently carried out and/or **in that** the first step of surface working (5) comprises pickling, grinding and/or polishing.

5. Method according to one of the claims 3 or 4, **characterised in that**, in the second step (6), a working tool (20) with a working head (21) is placed under pressure onto the inner surface (15) to be worked, respectively essentially in a direction normal to it, an rolling paths are produced on the said inner surface by a relative movement between the cooking vessel and the tool, by which paths inner surfaces (15) worked partially or completely over a planar area can be produced.

6. Method according to one of claims 3 or 4, **characterised in that**, in the second step (6), the cooking vessel (11) is turned about its axis of symmetry (18), **in that** a working tool (20) with a working head (21) is placed under pressure onto the inner surface (15) to be worked, respectively essentially in a direction normal to it, so that a rolled circular ring with the radius of the distance between the axis of symmetry (18) and the working head (21) is produced, and **in that** subsequently the working tool (20) is displaced radially (22) in order to act progressively on the predetermined portion of the inner surface (15).

7. Apparatus for carrying out the method according to one of the claims 3 to 6, **characterised in that** a holder for the cooking vessel is provided, with which holder the said cooking vessel is fixed or movable in one or more directions (18, 41, 42) parallel or perpendicular to its axis of symmetry (18), **in that** a working tool (20, 21) for the burnishing and/or hard-rolling of three-dimensional bodies is provided, with which tool a pressure can be applied to the inner surface (15) of the cooking vessel (11) in a direction normal to it, and **in that** the working tool (20, 21) is fixed or movable in one or more directions (51, 52, 53) by means of a displaceable holder, so that the working tip of the working tool (20, 21) can be moved in relation to the cooking vessel (11).

8. Apparatus according to claim 7, **characterised in that** a holder for the cooking vessel is provided, with which holder the said cooking vessel can be turned about its axis of symmetry (18), **in that** a working tool (20, 21) for the burnishing and/or hard-rolling of three-dimensional bodies is provided, with which tool a pressure can be applied to the inner surface (15) of the cooking vessel (11) in a direction normal to it, and **in that** the working tool (20, 21) is fastened to a displaceable holder, with which the working tip of the working tool (20, 21) can be moved radially (22) in relation to the axis of symmetry (18) of the cooking vessel (11), it being possible for an eccentric rotation of the working tool (20, 21) to be carried out in the centre region of the cooking vessel (11).

9. Apparatus according to claim 7 or 8, **characterised in that** the working tool (20) has a working head (21) which rolls transversely to the rolling direction when there is a movement in each direction (22), so that re-shaping without the occurrence of additional shear stresses can be achieved.

## Revendications

1. Récipient de cuisson en acier spécial avec un fond (12), avec des faces latérales externes (13), avec une face intérieure de fond (15), avec des faces de courbure de fond (16) et des faces latérales internes (17), moyennant quoi la face intérieure de fond (15), les faces de courbure de fond (16) et les faces latérales internes (17) forment une surface dirigée vers un produit de cuisson et moyennant quoi au moins une partie de la surface dirigée vers un produit de cuisson comporte une surface polie et pressée au laminoir, **caractérisé en ce qu'**au moins une partie des surfaces dirigées vers un produit de cuisson du récipient de cuisson embouti a été polie et/ou pressée au laminoir après l'emboutissage profond.

2. Récipient de cuisson selon la revendication 1 **caractérisé en ce que** la surface laminée présente une rugosité inférieure à 2 micromètres et la variation dureté-profondeur une valeur maximale d'au moins 1,2 fois la dureté initiale de la matière de base à une distance comprise entre 0,05 et 0,1 millimètre de la surface laminée, avec une profondeur de pénétration totale de dureté maximum après trempe d'au moins 0,3 millimètre.

3. Procédé pour la fabrication de récipients de cuisson (11), avec les étapes de procédé suivantes
- découpage de ronds (2) à partir d'un morceau d'acier (1) résistant à la rouille et aux acides,
- emboutissage profond, détourage et estampage des bords (3) du corps de pot,
- première étape d'usinage de surface (5) qui comprend un pré-usinage et un finissage des surfaces extérieures (12, 13) et des surfaces intérieures (16, 17),
**caractérisé en ce que** le procédé comprend une deuxième étape d'usinage de surface (6) après l'étape d'emboutissage profond du corps de pot, moyennant quoi une pression sensiblement dans le sens de la normale est appliquée de manière limitée localement à la surface par polissage et/ou pressage au laminoir sur au moins une partie de la surface intérieure (15) du récipient de cuisson (11).

4. Procédé selon la revendication 3, **caractérisé en ce que** la première étape d'usinage de surface (5) comprend seulement un pré-usinage des surfaces intérieures (15) à traiter au cours de la deuxième étape réalisée ensuite et/ou **en ce que** la première étape d'usinage de surface (5) comprend le décapage, le meulage et/ou le polissage.

5. Procédé selon l'une quelconque des revendications 3 ou 4, **caractérisé en ce que**, au cours de la deuxième étape (6), un outil d'usinage (20) avec une tête d'usinage (21) est mis sous pression respectivement sensiblement dans le sens de la normale sur la surface intérieure à usiner (15) et **en ce que**, grâce à un mouvement relatif entre le récipient de cuisson et l'outil, des lignes de laminage sont produites sur celle-ci, avec lesquelles des surfaces intérieures (15) partiellement ou totalement usinées plates peuvent être produites.

6. Procédé selon l'une quelconque des revendications 3 ou 4, **caractérisé en ce que**, au cours de la deuxième étape (6), le récipient de cuisson (11) est tourné autour de son axe de symétrie (18), **en ce qu'**un outil d'usinage (20) avec une tête d'usinage (21) est mis sous pression respectivement sensiblement dans le sens de la normale sur la surface intérieure à usiner (15), de sorte qu'il en résulte un anneau de cercle laminé avec le rayon de la distance axe de symétrie (18) - tête d'usinage (21) et **en ce que**, ensuite, l'outil d'usinage (20) est déplacé dans le sens radial (22) afin d'alimenter progressivement la portion prédéterminée de la surface intérieure (15).

7. Dispositif pour réaliser le procédé selon l'une quelconque des revendications 3 à 6, **caractérisé en ce qu'**il est prévu un appui pour le récipient de cuisson, avec lequel celui-ci est fixé ou peut se déplacer dans une ou plusieurs directions (18, 41, 42) parallèlement ou perpendiculairement à son axe de symétrie (18), **en ce qu'**un outil d'usinage (20, 21) est prévu pour le polissage et/ou le pressage au laminoir de volumes, avec lequel une pression peut être appliquée dans le sens de la normale sur la surface intérieure (15) du récipient de cuisson (11) et **en ce que** l'outil d'usinage (20, 21) est fixé ou peut se déplacer dans une ou plusieurs directions (51, 52, 53) sur un appui coulissant, de sorte que la pointe d'usinage de l'outil d'usinage (20, 21) est déplaçable par rapport au récipient de cuisson (11).

8. Dispositif selon la revendication 7, **caractérisé en ce qu'**il est prévu un appui pour le récipient de cuisson, avec lequel celui-ci peut tourner autour de son axe de symétrie (18), **en ce qu'**un outil d'usinage (20, 21) est prévu pour le polissage et/ou le pressage au laminoir de volumes, avec lequel une pression peut être appliquée dans le sens de la normale sur la surface intérieure (15) du récipient de cuisson (11) et **en ce que** l'outil d'usinage (20, 21) est fixé sur un appui coulissant avec lequel la pointe d'usinage de l'outil d'usinage (20, 21) est déplaçable dans le sens radial (22) par rapport à l'axe de symétrie (18) du récipient de cuisson (11), une rotation excentrique de l'outil d'usinage (20, 21) étant réalisable dans la zone centrale du récipient de cuisson (11).

9. Dispositif selon la revendication 7 ou 8, **caractérisé en ce que** l'outil d'usinage (20) comporte une tête d'usinage (21) qui, lors d'un mouvement, roule dans chaque direction (22) transversalement au sens de laminage, de sorte que l'on peut obtenir un formage sans l'apparition d'efforts de cisaillement supplémentaires.
